# EUROPÄISCHE PATENTSCHRIFT

(11) **EP 1 488 293 B1**
(45) Veröffentlichungstag und Bekanntmachung des Hinweises auf die Patenterteilung: **12.07.2006**
(21) Anmeldenummer: 03722229.6
(22) Anmeldetag: 20.03.2003
(51) Int. Cl.: G05B 19/418, E05B 47/06

(54) **ÜBERWACHUNGS- UND STEUERUNGSSYSTEM FÜR EINEN SCHALTSCHRANK**
ALARM AND CONTROL SYSTEM FOR A SWITCH CABINET
SYSTEME DE SURVEILLANCE ET DE COMMANDE POUR ARMOIRE ELECTRIQUE

(30) Priorität: 26.03.2002 DE 20204858 U
(43) Veröffentlichungstag der Anmeldung: 22.12.2004
(73) Patentinhaber: EMKA BESCHLAGTEILE GmbH & Co. KG, D-42551 Velbert (DE)
(72) Erfinder: HOFFMANN, Rainer, 40764 Langenfeld (DE)
(74) Vertreter: Müller, Karl-Ernst
(86) Internationale Anmeldenummer: PCT/DE2003/000928
(87) Internationale Veröffentlichungsnummer: WO 2003/081356

(56) Entgegenhaltungen:
- DE-U- 20 017 057
- US-A1- 2002 022 894
- FROMBERGER J: "FELDBUSFAEHIGE, INTELLIGENTE SENSOREN" MESSEN UND PRUFEN, IVA INTERNATIONAL, MUNCHEN, DE, Bd. 27, Nr. 7 / 8, 1. August 1991 (1991-08-01), Seiten 332,334-339, XP000262915 ISSN: 0937-3446
- KUNTZ W ET AL: "INTELLIGENTE SENSOREN UND AKTOREN" ELEKTRONIK, FRANZIS VERLAG GMBH. MUNCHEN, DE, Bd. 40, Nr. 18, 3. September 1991 (1991-09-03), Seiten 58,61-65, XP000262261 ISSN: 0013-5658
- KRIESEL W ET AL: "ASI IM UEBERBLICK" AKTUATOR SENSOR INTERFACE FUER DIE AUTOMATION, XX, XX, 1994, Seiten 11-60, XP002062938

## Beschreibung

Die Erfindung betrifft ein Überwachungs- und Steuerungssystem für wenigstens einen, durch eine Bedienerperson öffen- und schließbaren Schaltschrank.

Ein derartiges Überwachungs- und Steuerungssystem ist in der DE 200 06 373 U1 beschrieben; Kern des bekannten Überwachungs- und Steuerungssystems ist ein einziges Modul mit einem Mikroprozessor, an den eine Mehrzahl von Funktionseinheiten angeschlossen ist. So sind an das Modul bzw. dessen Mikroprozessor Eingabeeinheiten wie eine Tastatur, eine Transpondereinheit und/oder ein optischer Sensor zur Aufnahme eines Fingerabdrucks angeschlossen, wobei die entsprechenden Signale in dem Mikroprozessor des Moduls derart verarbeitet werden, daß die aufgenommenen Signale mit in dem Mikroprozessor abgespeicherten Berechtigungscodes verglichen und als Ergebnis an eine an das Modul angeschlossene, elektrisch arbeitende Verriegelungseinheit des Schaltschranks ein Steuerbefehl übermittelt wird, den von der Verriegelungseinheit gesteuerten Türverschluß freizugeben oder aber im Fall einer fehlenden Übereinstimmung zwischen aufgenommenen Signal und Berechtigungscode geschlossen zu halten. Daneben sind dem Mikroprozessor weitere Signalverarbeitungsaufgaben zugewiesen; so steuert der Mikroprozessor die Energieversorgung für alle angeschlossenen Einheiten, ferner kann eine Verbindung zu externen Netzeinrichtungen, wie zum Beispiel einem Mobiltelefonnetz hergestellt bzw. betrieben werden.

Mit dem bekannten Überwachungs- und Steuerungssystem ist der Nachteil verbunden, daß der den Kern des Moduls bildende Mikroprozessor den jeweils gestellten Funktions- und Steuerungsanforderungen entsprechend ausgelegt sein muß. Da sich die Anforderungsprofile während der Lebensdauer des Schaltschrankes bzw. des installierten Überwachungs- und Steuersystems ändern können, wird der Mikroprozessor einerseits mit einer entsprechenden Reserve ausgelegt, um gegebenenfalls weitere Funktionseinheiten anschließen und zusätzliche Signalverarbeitungen durchführen zu können. Damit bleiben unter Umständen bei Nichteintreten einer Änderung installierte und mit Mehrkosten verbundene Kapazitätsreserven ungenutzt. Wird andererseits der Mikroprozessor den aktuellen Anforderungen an das Überwachungs- und Steuerungssystem bei dessen Installation entsprechend ausgelegt, so ist eine Erweiterung des Anforderungsprofils nur möglich, wenn ein neuer Mikroprozessor mit entsprechend größerer Verarbeitungskapazität eingesetzt wird, was ebenfalls aufwendig ist. Als weiterer Nachteil ist zu nennen, daß eine Funktionsstörung bzw. ein Ausfall des Mikroprozessors bei dem bekannten Überwachungs- und Steuerungssystem zu einem Ausfall der gesamten Steuerung dieses Schaltschrankes führt, was erhebliche Folgen für die Betriebssicherheit derartiger Einrichtungen haben kann.

In der zur Bildung der Gattung herangezogenen DE 200 17 057 U1 ist ein elektronisches Verschlußsystem beschrieben, bei welchem ebenfalls eine Verriegelungseinheit für den Griffhebel des Verschlußsystems vorgesehen ist. Die Verriegelungseinheit ist modular aufgebaut und umfaßt ein sogenanntes Grundmodul mit dem mechanisch bewegten, jedoch elektrisch angetriebenen Riegel und einer zugeordneten Energieversorgung sowie ein sogenanntes Applikationsmodul, welches Bestandteil des Grundmoduls ist und darin auswechselbar angeordnet ist. Der Gegenstand der DE 200 17 057 U1 richtet sich auf den Einsatz unterschiedlicher Bedientechniken für die Verriegelungseinheit, und demzufolge sind unterschiedliche Ausführungen des Applikationsmoduls jeweils für unterschiedliche Bedientechniken eingerichtet, wozu das Grundmodul und/oder das jeweilige Applikationsmodul einen Mikroprozessor aufweisen können. Andere Steuerungsmöglichkeiten als das Zusammenwirken zwischen der Verriegelungseinheit (Grundmodul) und dem eingesetzten Applikationsmodul sind nicht angesprochen.

Der Erfindung liegt daher die Aufgabe zugrunde, ein Überwachungs- und Steuerungssystem für einen Schaltschrank zur Verfügung zu stellen, welches in seiner Auslegung flexibler ist und bei dessen Einsatz die Betriebssicherheit des Systems insgesamt verbessert ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht im einzelnen ein Überwachungs- und Steuerungssystem vor, wobei der Schaltschrank eine elektrisch arbeitende Verriegelungseinheit zum Verriegeln und zum Freigeben seines Türverschlusses aufweist und wobei eine Mehrzahl von über einen dem Informationsaustausch dienenden Datenbus verbundenen und jeweils nur für die Steuerung einer einzelnen Funktion ausgelegten Modulen mit abgeschlossenem Funktionsumfang vorgesehen ist, wobei jedes der einzelnen Module einen Mikroprozessor zur Signalverarbeitung aufweist und die Mikroprozessoren der verschiedenen Module unabhängig voneinander die ihnen zugeführten Signale verarbeiten und ein Entscheidungsignal als Verarbeitungsergebnis abgeben.

Mit der Erfindung ist der Vorteil verbunden, daß die in einem Überwachungs- und Steuerungssystem zu installierenden Funktionen bzw. Funktionsprüfungen getrennt ausgelegten und mit eigener Intelligenz in Form von unabhängig voneinander installierten Mikroprozessoren versehenen Modulen zugewiesen sind, die jeweils eine in sich geschlossene Signalverarbeitung durchführen. So sind nach Ausfuhrungsbeispielen der Erfindung getrennt arbeitende Bedienmodule, Eingabemodule. Griffmodule, Steuermodule, Kommunikationsmodule oder Sensormodule vorgesehen, die jeweils über einen eigenen Mikroprozessor verfügen. Die vorstehende Aufzählung der entsprechend dem jeweiligen Anforderungsprofil an das Überwachungs- und Steuerungssystem zu installierenden Module ist nicht abschließend; der Hinweis läßt den wesentlichen Vorteil des erfindungsgemäßen Überwachungs- und Steuerungssystems gegenüber dem Stand der Technik erkennen, daß einer Veränderung des Anforderungsprofils in einfacher Weise dadurch Rechnung getragen werden kann, daß zusätzliche und ebenfalls eine eigene Intelligenz aufweisende Module in das Überwachungs- und Steuerungssystem integriert werden können, ohne daß Veränderungen an den weiteren, bereits vorhandenen Modulen vorzunehmen sind. Damit können die einzelnen Module mit ihren Mikroprozessoren auf die durch die konkreten Signalverarbeitungsaufgaben bedingten Einzelanforderungen abgestimmt und ausgelegt sein. Als ein weiterer Vorteil ergibt sich, daß eine Störung in einem bzw. ein Ausfall eines Moduls die weiteren Funktionen anderer Module nicht oder nur in dem Umfang beeinträchtigt, wie das von dem betroffenen Modul abgegebene Entscheidungssignal weiterzuverarbeiten ist. So können zum Beispiel zwei Bedienmodule vorhanden sein, die derart angeordnet sind, daß bei Störung des einen Bedienmoduls die Steuerung des Schaltschrankes durch das zweite Bedienmodul weiterhin möglich ist. Zusätzlich braucht in einem solchen Fall nur das eine Modul ausgewechselt zu werden, ohne daß auf Wechselwirkungen mit anderen angeschlossenen Funktionseinheiten Bedacht zu nehmen ist.

Ein weiterer Vorteil besteht darin, daß der Datenaustausch zwischen den einzelnen Modulen auf ein Minimum beschränkt ist, da die jeweilige Signalverarbeitung dezentral in jedem einzelnen Modul erfolgt; dies eröffnet die Möglichkeit, mit einem nur begrenzten Aufwand den Datenaustausch verschlüsselt durchzuführen. Auch ist der Einsatz mehrerer gleicher Module mit identischem Verarbeitungsumfang als Sicherheitsreserve oder mit parallelem Arbeitsumfang in einfacher Weise zu realisieren.

Das Überwachungs- und Steuerungssystem ist nach einem Ausführungsbeispiel der Erfindung auch darauf anwendbar, daß eine Mehrzahl von Schaltschränken durch den Datenbus miteinander verbunden sind und in jedem der Schaltschränke Module mit abgeschlossenem Funktionsumfang angeordnet sind, deren Entscheidungssignal an die nachgeschalteten Module anderer Schaltschränke übermittelbar ist.

Im einzelnen kann nach einem Ausführungsbeispiel der Erfindung ein an eine Eingabetastatur angeschlossenes Bedienmodul vorgesehen sein, in dessen Mikroprozessor die Eingabe einer Zahlenkombination in die Tastatur überprüft wird; dabei kann die die Zugangsberechtigung eröffnende Zahlenkombination in dem Mikroprozessor des Bedienmoduls abgelegt sein; eine alternative Möglichkeit besteht darin, daß der Mikroprozessor des Bedienmoduls über den Datenbus auf eine extern angeschlossene Datenbank zugreift, in welcher die die Zugangsberechtigung eröffnende Zahlenkombination abgelegt ist. Jedenfalls erfolgt der Vergleich der Zahlenkombination bis zur Abgabe eines Ja/Nein-Entscheidungssignals in dem Mikroprozessur des Bedienmoduls. Dabei ist der Einsatz mehrerer Bedienmodule mit gleichem oder mit unterschiedlichem Funktionsumfang möglich.

Entsprechend ist nach einem Ausführungsbeispiel der Erfindung wenigstens ein an einer als optischer Sensor oder als Transpondereinrichtung ausgebildete Eingabeeinheit angeschlossenes Eingabemodul vorgesehen, welches alternativ oder zusätzlich zu einem mit einer Eingabetastatur zusammengeschalteten Bedienmodul vorgesehen sein kann. Auch hier erfolgt die Prüfung der Zusatzberechtigung durch entsprechende Signalverarbeitung in dem Mikroprozessor des Eingabemoduls.

Erfindungsgemäß ist wenigstens ein die Funktion der elektrisch arbeitenden Verriegelungseinheit zum Verriegeln und zum Freigeben des Türverschlusses des Schaltschrankes ansteuerndes Griffmodul vorgesehen, wobei das Griffmodul auf das Entscheidungssignal eines Bedienmoduls und/oder eines Eingabemoduls hin tätig wird und wenigstens eine angeschlossene Verriegelungseinheit eines Türverschlusses ansteuert. Das Griffmodul kann dafür eingerichtet sein, gruppenweise mehrere Verriegelungseinheiten für mehrere Türverschlüsse anzusteuern, die entweder in einem Schrank angeordnet sind oder aber auch in unterschiedlichen, über den Datenbus angeschlossenen weiteren Schaltschränken angeordnet sein können.

Nach einem Ausführungsbeispiel der Erfindung ist wenigstens ein mit externen Kommunikationseinrichtungen kommunizierendes Kommunikationsmodul vorgesehen, über welches in an sich bekannter Weise Daten über den Zustand der einzelnen Module an externe Netzeinrichtungen übermittelt werden können.

Weiterhin ist wenigstens ein die Energieversorgung der Module und/oder der Verriegelungseinheiten steuerndes Steuermodul vorgesehen, wobei nur an dieses entsprechende Steuermodul der Anschluß eines Netzteils gegeben ist. Dieses Steuermodul kann ähnlich der in der gattungsbildenden DE 200 06 373 U1 beschriebenen Arbeitsweise die Energieversorgung der einzelnen Module je nach Anforderung steuern.

Nach einem Ausführungsbeispiel der Erfindung kann wenigstens ein an Umwelteinflüsse, die in und/oder am Schaltschrank herrschen, aufnehmende Sensoren angeschlossenes Sensormodul vorgesehen sein. Bei den zu erfassenden Umwelteinflüssen kann es sich beispielsweise um die Temperatur oder die Feuchte im Inneren des Schaltschrankes, um eine Rauchentwicklung oder auftretende Erschütterungen handeln. Als ein Umwelteinfluß hat aber auch die aus dem Netz in den Schaltschrank geführte Spannung zu gelten, die einer Kontrolle bedarf. Den unterschiedlichen Umwelteinflüssen sind unterschiedliche Sensoren zuzuordnen, deren Signale einem zentralen Sensormodul übermittelt werden, in welchem sie zu einem Entscheidungssignal verarbeitet werden. Es kann aber auch vorgesehen sein, daß an jeden einzelnen Sensor oder an gruppenweise zusammengefaßte Sensoren jeweils ein Sensormodul angeschlossen ist.

Schließlich kann nach einem Ausführungsbeispiel der Erfindung vorgesehen sein, daß an den Datenbus wenigstens eine extern angeordnete Datenbank angeschlossen ist, in welche entsprechende Signale von den einzelnen Modulen übertragen werden können, oder in der Basisdaten abgespeichert sind, auf die die Module je nach Anforderungsprofil zugreifen können oder zugreifen müssen.

Die Anordnung der dezentralen Module mit eigenen Mikroprozessoren gibt weiterhin in vorteilhafter Weise die Möglichkeit, einen automatischen zyklischen Testlauf für die Überwachung der Funktion der einzelnen Module einzurichten, um Fehlerquellen frühzeitig zu erkennen. Ebenfalls können die einzelnen Module in vorteilhafter Weise innerhalb ihres Funktionsumfangs prgrammierbar eingerichtet sein, wobei auch ein Softwareupdate der Module über den Datenbus gegeben ist. Insgesamt ist innerhalb des Überwachungs- und Steuerungssystem der Einsatz von die Kernfunktionen betreffenden Modulen wie auch von kundenspezifischen und daher anwenderorientierten Modulen möglich, so daß das erfindungsgemäße Überwachungs- und Steuerungssystem in Abhängigkeit von den besonderen Einsatzbedingungen eines Schaltschrankes den Anforderungen variabel angepaßt werden kann.

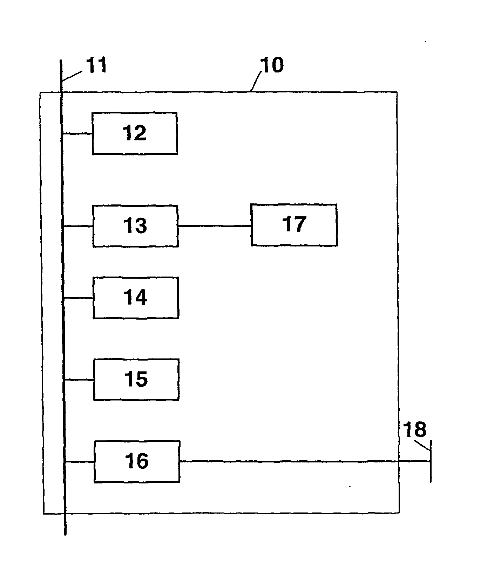

In der Zeichnung ist ein Ausführungsbeispiel der Erfindung wiedergegeben, welches nachstehend beschrieben ist. Die einzige Figur zeigt einen Schrank mit zugeordneten Modulen in einer schematischen Darstellung.

Mit 10 ist ein Schaltschrank bezeichnet, durch den ein Datenbus 11 geführt ist; gegebenenfalls führt der Datenbus zu weiteren Schaltschränken 10. Im Rahmen des dargestellten Schrankes 10 ist ein Bedienmodul 12 mit einem eigenen Mikroprozessor an den Datenbus 11 angeschlossen, dessen Funktion bereits beschrieben ist. Entsprechendes gilt auch für ein Griffmodul 13, welches neben seinem Anschluß an dem Datenbus 11 auch mit einer Verriegelungseinrichtung 17 für einen nicht dargestellten Türverschluß des Schrankes gekoppelt ist, so daß ein entsprechendes Auslösesignal an die Verriegelungseinheit 17 übertragbar ist.

Weiterhin sind an den Datenbus 11 angeschlossen ein Eingabemodul 14, ein Steuermodul 15 sowie ein Kommunikationsmodul 16, welches zusätzlich zu seinem Anschluß an den Datenbus 11 noch über einen weiteren Anschluß mit einem externen Kommunikationsnetz 18 verbunden ist. Die einzelnen Funktionen der vorstehend benannten Module sind vorstehend beschrieben.

## Patentansprüche

1. Schaltschrank-Überwachungs- und -Steuerungssystem für wenigstens einen, durch eine Bedienerperson öffen- und schließbaren Schaltschrank, wobei der Schaltschrank eine elektrisch arbeitende Verriegelungseinheit (17) zum Verriegeln und zum Freigeben seines Türverschlusses aufweist, **dadurch gekennzeichnet, dass** das Überwachungs- und Steuerungssystem eine Mehrzahl von über einen dem Informationsaustausch dienenden Datenbus (11) verbundenen und jeweils nur für die Steuerung einer einzelnen Funktion ausgelegten Modulen mit abgeschlossenem Funktionsumfang vorgesehen ist, wobei jedes der einzelnen Module einen Mikroprozessor zur Signalverarbeitung aufweist und die Mikroprozessoren der verschiedenen Module unabhängig voneinander die ihnen zugeführten Signale verarbeiten und ein Entscheidungssignal als Verarbeitungsergebnis abgeben.

2. System nach Anspruch 1, bei welchem eine Mehrzahl von Schaltschränken (10) durch den Datenbus (11) miteinander verbunden sind und in jedem der Schaltschränke (10) Module (12, 13, 14, 15, 16) mit abgeschlossenem Funktionsumfang angeordnet sind, deren Entscheidungssignal an die nachgeschalteten Module anderer Schaltschränke (10) übermittelbar ist.

3. System nach Anspruch 1 oder 2, bei welchem wenigstens ein an eine Eingabetastatur angeschlossenes Bedienmodul (12) vorgesehen ist.

4. System nach einem der Ansprüche 1 bis 3, bei welchem wenigstens ein an eine als optischer Sensor oder als Transpondereinrichtung ausgebildete Eingabeeinheit angeschlossenes Eingabemodul (14) vorgesehen ist.

5. System nach einem der Ansprüche 1 bis 4, bei welchem wenigstens ein die Funktion der Verriegelungseinheit (17) für den Türverschluß ansteuerndes Griffmodul (13) vorgesehen ist.

6. System nach Anspruch 5, bei welchem an das Griffmodul (13) eine Mehrzahl von an dem Schaltschrank (10) ausgebildeten Türverschlüssen angeschlossen ist.

7. System nach Anspruch 5, bei welchem an das Griffmodul (13) eines Schaltschrankes (10) eine Mehrzahl von an anderen, über den Datenbus (11) angekoppelten Schaltschränken (10) angeordneten weiteren Verriegelungseinheiten (17) angeschlossen ist.

8. System nach einem der Ansprüche 1 bis 7, bei welchem wenigstens ein mit externen Kommunikationseinrichtungen kommunizierendes Kommunikationsmodul (16) vorgesehen ist.

9. System nach einem der Ansprüche 1 bis 8, bei welchem wenigstens ein die Energieversorgung der Module (12, 13, 14, 16) und/oder der Verriegelungseinheiten (17) steuerndes Steuermodul (15) vorgesehen ist.

10. System nach einem der Ansprüche 1 bis 9, bei welchem wenigstens ein an in und am Schaltschrank herrschende Umwelteinflüsse aufnehmende Sensoren angeschlossenes Sensormodul vorgesehen ist.

11. System nach Anspruch 10, bei welchem an einen, einen definierten Umwelteinfluß erfassenden Sensor jeweils ein eigenes Sensormodul angeschlossen ist.

12. System nach einem der Ansprüche 1 bis 11, bei welchem an den Datenbus (11) eine extern angeordnete Datenbank angeschlossen ist.

## Claims

1. Switch cabinet - alarm and control system for at least one switch cabinet that can be opened and closed by an operator, whereby the switch cabinet comprises an electronically functioning locking unit (17) for closing and releasing the Switch cabinet door latch, **characterized in that** at the alarm and control system there is provided a plurality of modules having closed loop function scopes and connected via a data bus (11) serving to provide exchanges of information and each being designed only for the control of an individual function, whereby each of the individual modules comprises a microprocessor for signal processing and the microprocessors of the different modules processing independently of one another the signals conducted thereto and outputting a decision signal as the processing result.

2. System in accordance with claim 1, whereby a plurality of switch cabinets (10) are connected with one another via the data bus (11) and, in each of the switch cabinets (10), modules (12, 13, 14, 15, 16) with closed loop function scopes are arranged whose decision signal is transmittable to the subsequently-operating modules of different switch cabinets (10).

3. System according to claim 1 or 2, whereby at least one operator module (12) connected to an input keyboard is provided.

4. System according to one of the claims 1-3, whereby at least one input module (14) connected to an input unit configured as an optical sensor or as a transponder device is provided.

5. System according to one of the claims 1-4, whereby at least one grip module (13) controlling the function of the locking unit (17) for the door lock is provided.

6. System according to claim 5, whereby a plurality of door locks configured on the switch cabinets (10) are connected to the grip module (13).

7. System according to claim 5, whereby a plurality of further locking units (17) that are coupled to other switch cabinets (10) via the data bus (11) are connected to the grip module (13) of a switch cabinet (10).

8. System according to one of the claims 1-7, whereby at least one communication module (16) communicating with external communication devices is provided.

9. System according to one of the claims 1-8, whereby at least one control module (15) for controlling the energy supply of the modules (12, 13, 14, 16) and/or of the locking units (17) is provided.

10. System according to one of the claims 1-9, whereby at least one sensor module connected with sensors for capturing environmental influences produced on or in a switch cabinet is provided.

11. System according to claim 10, whereby an own sensor module is each connected to a sensor operable to capture a defined environmental influence.

12. System according to one of the claims 1-11, whereby an externally arranged databank is connected to the data bus (11).

## Revendications

1. Système de surveillance et de contrôle d'armoire de commande pour au moins une armoire de commande pouvant être ouverte et fermée par un utilisateur, l'armoire de commande présentant une unité de verrouillage (17) travaillant de façon électrique pour le verrouillage et pour le déblocage de sa fermeture de porte, **caractérisé en ce que** le système de surveillance et de contrôle comprend une pluralité de modules, reliés par un bus de données (11) servant à l'échange d'informations et conçus chacun seulement pour le contrôle d'une fonction individuelle, avec une étendue de fonction fermée, chacun des modules individuels présentant un microprocesseur pour le traitement du signal et les microprocesseurs des différents modules traitant indépendamment les uns des autres les signaux qui leur sont amenés et délivrant un signal de décision comme résultat de traitement.

2. Système selon la revendication 1, sur lequel une pluralité d'armoires de commande (10) sont reliées entre elles par le bus de données (11) et des modules (12, 13, 14, 15, 16) avec une étendue de fonction fermée étant disposés dans chacune des armoires de commande (10), modules dont le signal de décision peut être transmis aux modules placés en aval d'autres armoires de commande (10).

3. Système selon la revendication 1 ou 2, sur lequel est prévu au moins un module de commande (12) raccordé à un clavier d'entrée.

4. Système selon l'une quelconque des revendications 1 à 3, sur lequel est prévu au moins un module d'entrée (14) raccordé à une unité d'entrée conçue comme capteur optique ou comme dispositif transpondeur.

5. Système selon l'une quelconque des revendications 1 à 4, sur lequel est prévu au moins un module à poignée (13) activant la fonction de l'unité de verrouillage (17) pour la fermeture de la porte.

6. Système selon la revendication 5, sur lequel une pluralité de fermetures de porte réalisées sur l'armoire de commande (10) est raccordée au module à poignée (13).

7. Système selon la revendication 5, sur lequel une pluralité d'autres unités de verrouillage (17) disposées sur d'autres armoires de commande (10), couplées par le bus de données (11), est raccordée au module à poignée (13) d'une armoire de commande (10).

8. Système selon l'une quelconque des revendications 1 à 7, sur lequel est prévu au moins un module de communication (16) communiquant avec des dispositifs de communication externes.

9. Système selon l'une quelconque des revendications 1 à 8, sur lequel est prévu au moins un module de commande (15) commandant l'alimentation en énergie des modules (12, 13, 14, 16) et/ou des unités de verrouillage (17).

10. Système selon l'une quelconque des revendications 1 à 9, sur lequel est prévu au moins un module de capteur raccordé à des capteurs enregistrant des influences d'environnement régnant dans et sur l'armoire de commande.

11. Système selon la revendication 10, sur lequel un module de capteur propre est raccordé respectivement à un capteur enregistrant une influence d'environnement définie.

12. Système selon l'une quelconque des revendications 1 à 11, sur lequel une banque de données disposée de façon externe est raccordée au bus de données (11).
